# EUROPEAN PATENT APPLICATION

(11) **EP 1 834 565 A1**
(43) Date of publication of application: **19.09.2007**
(21) Application number: 06005162.0
(22) Date of filing: 14.03.2006
(51) Int. Cl.: A47L 9/20

(54) **Filtering apparatus with percussion means**

(71) Applicant: Soteco S.p.A., 26022 Castelverde (IT)
(72) Inventor: Pierluigi, Raineri, 26043 Persico Dosimo (CR) (IT); Mauro, Avanzini, 26032 Ostiano (CR) (IT); Giuliano, Bartoletti, 26100 Cremona (IT); Gianni, Cirio, 14055 Costigliole d'Asti (AT) (IT)
(74) Representative: Crugnola, Pietro

(57) **Abstract**

The filtering apparatus (100), particularly for sucking apparatuses (1), comprises filtering means and percussion means (10) of said filtering means.

## Description

The present invention relates to a filtering apparatus.

In vacuum cleaners for domestic and industrial use filtering apparatuses are provided that are associated with the motor unit that provides the sucking action.

These filtering apparatuses purify the air of all sucked detritus, to be sent to the motor unit for cooling and to be subsequently returned to the environment.

Known filtering apparatuses comprise a filtering body of various shape that is made of porous material, for example of cloth or synthetic fabric, and which is contained in a suitable cavity that can be obtained in the body of vacuum cleaners or in the casing that contains the motor unit.

Into the cavity conduits lead in through which the air is sucked from outside and from the latter a further conduit leads away that is directed to the motor unit and that conveys the filtered air to it.

The continuous use of the vacuum cleaners over time causes a reduction in the filtering capacity of the filtering body, due to the progressive clogging of the pores of the latter.

For this reason, users are forced to periodically dismantle the filtering apparatuses and proceed with the cleaning or replacement of the filtering bodies, to restore the operating efficiency of the vacuum cleaners.

Cleaning of the dismantled filtering bodies is conducted manually and this causes a series of problems.

A first problem is that removal of the clogged filtering bodies from the respective cavities generates clouds of dust that spread in the surrounding area, hitting users and causing grave breathing discomfort for those who suffer from allergies to such dusts.

A second problem is that dismantling of the filtering apparatuses for reaching the filtering bodies is an inconvenient and not a simple operation and for this reason not all users are able to perform it.

A third problem is that dismantling, cleaning or replacing and final refitting require a noticeably long time.

From US 5,951,746 a sucking apparatus is known that is provided with a filtering apparatus of self-cleaning type, which is cleaned of the impurities collected during sucking, by reversing the direction of the flows of sucked air that traverse it.

Reversal of the flows of air is activated by the user and causes the simultaneous interruption of sucking of the sucking apparatus for the entire interval of time required for cleaning or for replacement of the filtering body with which it is provided.

The technical aim of the present invention is to improve the state of the art.

An object of the invention is to make a filtering apparatus that keeps itself clean automatically, regardless of the amount of time of use.

An other object of the invention is to make a filtering apparatus that does not require periodic dismantling and refitting and that does not therefore create physical discomforts for users and time losses through proceeding with such operations.

An other object of the invention is to make a filtering apparatus for the cleaning of which interruption of the sucking action of the sucking apparatuses on which it is mounted is not required.

According to the invention, there is provided a filtering apparatus particularly for sucking apparatuses, characterised in that it comprises filtering means, percussion means of said filtering means.

The filtering apparatus, particularly for sucking apparatuses, is kept constantly clean and permeable even during operation, dropping the impurities and dust inside the collection chambers provided for this purpose in sucking apparatuses.

Further features and advantages of the invention will become clearer from the detailed disclosure of a filtering apparatus, illustrated by way of non-limitative example in the attached tables of drawings in which:
Figure 1 is an interrupted vertical section view of a sucking apparatus provided with a filtering apparatus of self-cleaning type;
Figure 2 is an interrupted vertical section view of the sucking apparatus in Figure 1 provided with a filtering apparatus of self-cleaning type, in a further possible embodiment;

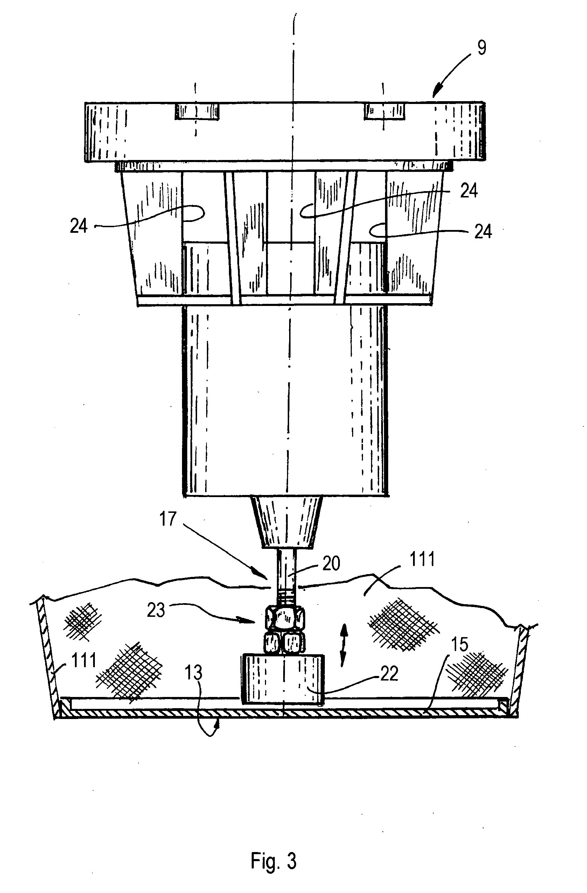

Figure 3 is a side view of the filtering apparatus in Figure 1, extracted from the corresponding sucking apparatus.

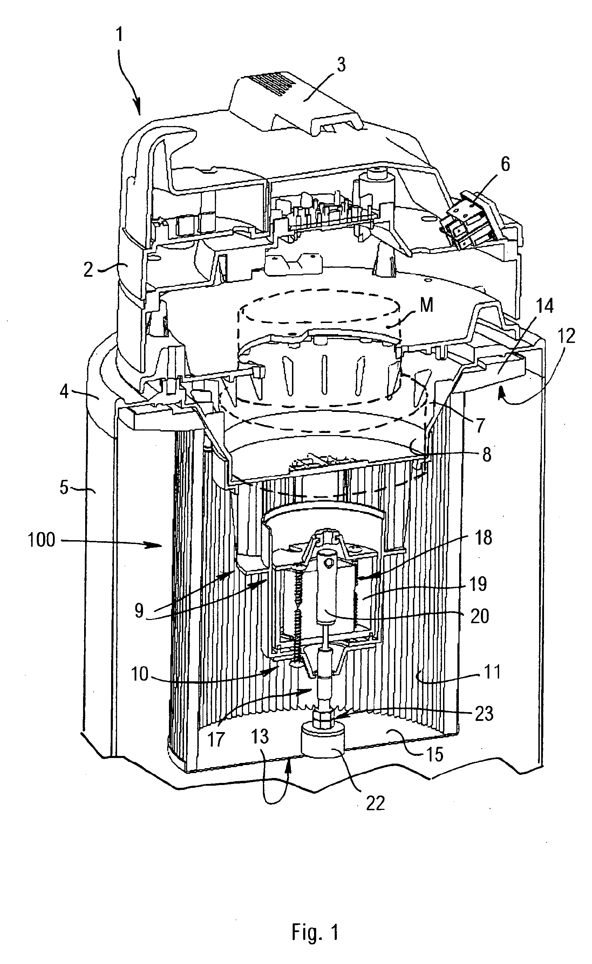

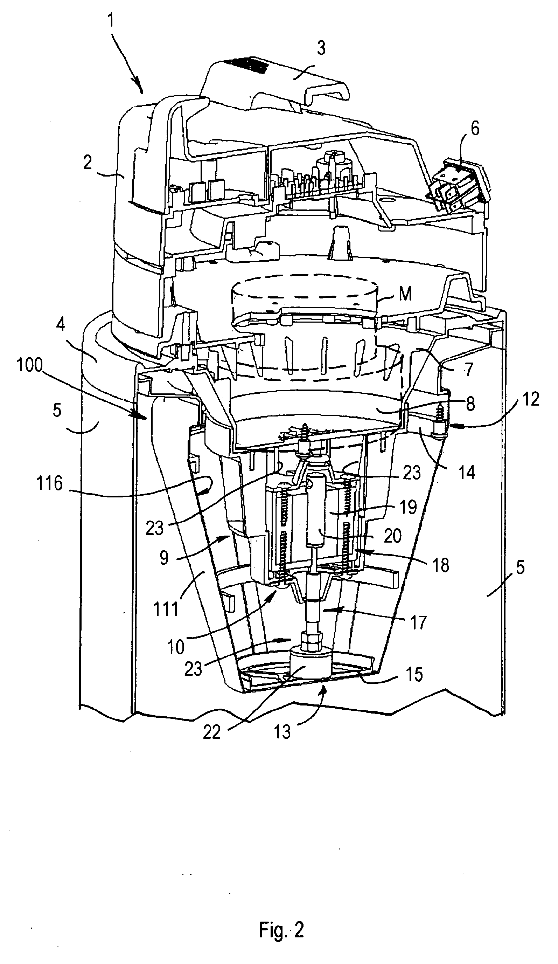

With reference to Figure 1 and 2, 1 indicates overall a sucking apparatus, in the case in point a vacuum cleaner for domestic use.

The sucking apparatus 1 comprises a head 2 provided, in the upper zone, with a grip handle 3 and in the lower opposite zone with a perimeter edge 4 that forms a collar for coupling with a matching upper perimeter edge of a lower drum 5, provided for containing the impurities and the sucked detritus.

The head 2 has a box structure and inside the latter there is housed a motor unit M, indicated with a dotted line, that provides the suction and the members that conventionally actuate and deactuate it, for example a switch 6.

The motor unit is supported on the head 2 by means of a. support 7 that forms a suitable housing space 8.

The support 7 extends below inside the drum 5 with fastening and supporting means 9 for percussion means 10, disclosed in greater detail below.

Below the edge 4 there is supported a filtering apparatus 100 that comprises a microscopically porous element 11 that is designed for filtering the sucked air before this is sent to the motor unit for cooling and is subsequently returned to the environment.

The element 11 is permeable to air flows and defines a first end 12 and an opposite second end 13, on which are mounted respectively first head means 14 and second head means 15.

The element 11, in a first embodiment shown in Figure 1, has a cylindrical shape whereas, in a second possible embodiment shown in Figure 2 and indicated by 111, has a frustum conical shape with the smaller base facing inside the drum 5.

In both embodiments, the element 11 has internally a cavity 16, 116 inside which percussion means 10 is arranged.

The latter comprises oscillating means 17 that is arranged to oscillate and repeatedly hit the second head means 15, and through which the vibrations generated by the blows are transmitted to the element 11.

The oscillating means 17 is provided with means 18 for actuating or deactuating the oscillations, which comprises essentially coil means 19 that is excitable through a user command or is constantly active.

The percussion means 10 comprises a shaft 20 that is supported slidably and coaxially to the element 11 by the fastening and supporting means 9 within the coil means 19, also the latter being coaxial with and concentric on the element 11.

The shaft 20 is made of magnetically sensitive material and is provided at the end 21 facing the second head means 15 with a pad 22 in elastic material, set up for knocking against the head means 15, without causing structural damage to the latter.

Between the pad 22 and the end 21 there is interposed means 23 for micrometric adjustment of the axial position of the pad 22 in function of the amplitude of the axial oscillation stroke thereof.

Operation of the filtering apparatus is as follows: the air is sucked inside the drum 5 through an opening (not visible) provided in the latter, by the suction action produced by the motor unit M.

Within the drum 5 the coarse detritus is released whereas the finer particles are filtered when the air traverses the porous element 11 or 111.

From the internal cavity thereof the air continues through a series of openings 24 obtained in the fastening and supporting means 9, reaching the motor unit M for cooling.

From the latter, by means of an opening (not visible) obtained in the head 2 the purified air is returned to the environment.

During sucking, the user, for example by means of a suitable switch control 6, can actuate the percussion means 10.

In detail, the coil means 19 is excited and creates a magnetic field that acts on the shaft 20 by oscillating it in an axial direction.

This oscillation causes a series of blows between the pad 22 and the second head means 15 that generate vibrations that are able to be transmitted to the porous element 11 or 111.

These vibrations prevent the particles of dust from adhering to the filtering surface of the element 11 or 111, making them fall inside the drum 5 where they are collected together with coarser detritus.

In this way, the surface of the element 11 or 111 keeps itself constantly and automatically free of clogging, without it being necessary to periodically clean it.

Exciting the coil means 19, and therefore oscillations of the shaft 20, can occur through a user command or can be actuated by the sucking step of the sucking apparatus 1.

## Claims

1. Filtering apparatus (100), particularly for sucking apparatuses (1), **characterised in that** it comprises:
- filtering means,
- percussion means (10) of said filtering means.

2. Filtering apparatus (100) according to claim 1 wherein said filtering means comprises:
- a microscopically porous element (11; 111), which is permeable to air flows and which defines a first end (12) and a second end (13) opposite said first end (12),
- first head means (14) and second head means (15) fixedly mounted respectively on said first end (12) and second end (13).

3. Filtering apparatus (100) according to claim 1 or 2
wherein said percussion means (10) comprises:
- oscillating means (17) arranged for oscillating between said first (14) and second (15) head means,
- actuating means (18) of said oscillating means (17),
- fastening and supporting means (9) of said oscillating means (17) to at least one of said first (14) or second (15) head means.

4. Filtering apparatus (100) according to claim 3 wherein said oscillating means (17) is set up to oscillate to repeatedly hit at least one of said first (14) or second (15) head means creating vibrations on said microscopically porous element (11; 111).

5. Filtering apparatus (100) according to claim 2 or 4 wherein said microscopically porous element (11) has a cylindrical shape and axially has a cavity (16), said oscillating means (17) being arranged inside said cavity (16) and arranged for oscillating in a direction parallel to a longitudinal axis of said microscopically porous element (11).

6. Filtering apparatus (100) according to claim 2 or 4 wherein said porous element (111) has a frustum conical shape and axially has a cavity (116), said oscillating means (17) being arranged inside said cavity (116) and arranged for oscillating in a direction parallel to a longitudinal axis of said microscopically porous element (111).

7. Filtering apparatus (100) according to any one of claims 3 to 6 wherein said percussion means (17) comprises:
- at least a shaft (20) supported slidably by said fitting and supporting means (9),
- pad means (22) in contact with at least one of said first (14) or second (15) head means, mounted on an end of said shaft (20).

8. Filtering apparatus (100) according to claim 6 wherein said shaft (20) is internally coaxial with said microscopically porous element (11; 111).

9. Filtering apparatus (100) according to claim 6 or 7 wherein said shaft (20) is made of magnetically sensitive material.

10. Filtering apparatus (100) according to any one of claims 6 to 8 wherein between said pad means (22) and said end of said shaft (20) micrometric adjustment means (23) is interposed for adjusting the axial position of said pad means (22).

11. Filtering apparatus (100) according to claim 3 or 6 or 7 or 8 wherein said actuating means (18) comprises coil means (19) wound peripherally around said shaft (20) and designed for creating alternatively active magnetic fields on the latter and making it oscillate axially.

12. Filtering apparatus (100) according to claim 3 wherein said fastening and supporting means (9) comprises a box body fixed relative to at least one of said first (14) or second (15) head means and internally facing said microscopically porous element (11; 111), said box body internally shaping a housing seat of said coil means (18) and perimeter openings (24) for the passage of air flows.

13. Filtering apparatus (100) according to any one of claims 2 to 12 wherein at least one of said first (14) or second (15) head means is fixed relative to a sucking appliance (1).

14. Filtering apparatus (100) according to any one of claims 1 to 13 wherein said filtering apparatus (100) is mounted inside collecting chambers for collecting detritus of sucking apparatuses (1).

15. Filtering apparatus (100) according to any one of claims 1 to 13 wherein said filtering apparatus (100) is mounted coupled with sucking units of sucking appliances (1), arranged so as to be contained inside collecting chambers of the latter.
